# EUROPÄISCHE PATENTANMELDUNG

(11) **EP 2 128 555 A2**
(43) Veröffentlichungstag der Anmeldung: **02.12.2009**
(21) Anmeldenummer: 09000201.5
(22) Anmeldetag: 09.01.2009
(51) Int. Cl.: F41G 7/26, F41G 7/30, F42C 13/02

(54) **Verfahren zur Ermittlung der Rollwinkellage eines rotierenden Flugkörpers**

(30) Priorität: 18.01.2008 DE 102008005100
(71) Anmelder: Diehl BGT Defence GmbH & Co.KG, 88662 Überlingen (DE)
(72) Erfinder: Tengler, Jürgen, 90518 Altdorf (DE); Tholl, Hans Dieter, Dr., 88690 Uhldingen-Mühlhofen (DE); Weseloh, Edgar, 90552 Röthenbach (DE)
(74) Vertreter: Diehl Patentabteilung

(57) **Zusammenfassung**

Die Erfindung betrifft ein Verfahren zur Ermittlung der Rollwinkellage eines rotierenden Flugkörpers relativ zu einer Feststation mit Hilfe eines von der Feststation ausgesendeten und von dem Flugkörper empfangenen Lichtstrahls, wobei im Heck des Flugkörpers ein optisches Element angeordnet ist, durch welches der Lichtstrahl auf einen Sensor fokussiert wird, wobei die Fokussierung abhängig vom Winkel zwischen der Lichtstrahlenausbreitungsrichtung und der Längsachse des Flugkörpers außerzentrisch auf den Sensor erfolgt und der Sensor wenigstens einen radial nach außen verlaufenden lichtunempfindlichen Segmentbereich umfasst oder der Sensor ein der Sensoroberfläche optisch vorgeschaltetes Modulationselement umfasst, das wenigsten einen optischen, radial nach außen verlaufenden Segmentbereich umfasst, der gegenüber benachbarten Bereichen eine reduzierte optische Durchlässigkeit aufweist, derart, dass bei Rotation des Flugkörpers um die Längsachse der außerzentrisch angeordnete Fokus des Lichtstrahls ein rollwinkellagenabhängiges elektrisches Signal erzeugt.

## Beschreibung

Die Erfindung betrifft ein Verfahren zur Ermittlung der Rollwinkellage eines rotierenden Flugkörpers relativ zu einer Feststation mithilfe eines von der Feststation ausgesendeten und von dem Flugkörper empfangenen Lichtstrahls, wobei im Heck des Flugkörpers ein optisches Element angeordnet ist.

Aus dem Stand der Technik sind Verfahren und Vorrichtungen zur Ermittlung der Rollwinkellage eines rotierenden Flugkörpers bekannt. DE 44 16 210 A1 ermittelt die Rollwinkellage eines sich an einer beliebigen Position innerhalb eines Leitstrahls, der von einer Feststation ausgesendet wird, befindlichen Flugkörpers auf einfache Weise dadurch, dass mithilfe eines holographischen, optischen Elementes ein phasenkodierter Leitstrahl erzeugt wird. Dieser Leitstrahl wird in einer Empfangsvorrichtung des Flugkörpers mittels eines weiteren holographischen Elementes, welches starr mit dem Flugkörper verbunden ist, dekodiert.

DE 44 16 211 A1 lehrt ein Verfahren, wonach ein Leitstrahl zur Flugbahnkorrektur des Geschosses auf den aufgrund der Zieldaten errechneten Kollisionspunkt zu richten und in mindestens fünf Teilstrahlen (Leitstrahlsegmente) aufzuteilen ist, die um ein zentrales, auf den Kollisionspunkt gerichtetes Leitstrahlsegment herum angeordnet sind. Dabei wird jedes Leitstrahlsegment unterschiedlich moduliert und mithilfe der im Geschoss angeordneten Empfangsvorrichtung wird dann aus der Modulation des Leitstrahlsegmentes, abhängig in welchem Leitstrahlsegmentbereich sich das Geschoss befindet, die für die Korrektur erforderliche Winkellage im Bezug auf den Kollisionspunkt ermittelt.

Der Erfindung liegt die Aufgabe zugrunde, ein Verfahren zur Ermittlung der Rollwinkellage eines rotierenden Flugkörpers relativ zu einer Feststation mithilfe eines von der Feststation ausgesendeten und von dem Flugkörper empfangenen Lichtstrahls, wobei im Heck des Flugkörpers ein optisches Element angeordnet ist, derart weiterzubilden, dass sowohl die Anwendung des Verfahrens als auch die dafür benötigten Vorrichtungen mit einfachen Mitteln aufgebaut werden können und eine zuverlässige und genaue Funktion ausführen. Eine weitere Aufgabe der Erfindung ist es, das Verfahren bezüglich der atmosphärischen Einflüsse sowie munitionsspezifischen Abweichungen (Nutationsbewegung, Anstellwinkel, Rotation) im Raum unempfindlich auszulegen und eine zuverlässige Ermittlung des Rollwinkels und/oder der Nutation des Flugkörpers zu gewährleisten.

Diese Aufgabe wird durch die Merkmale des Anspruches 1 gelöst. Vorteilhafte Weiterbildungen der Erfindung ergeben sich aus den Unteransprüchen 2 bis 19.

Erfindungsgemäß wird durch das optische Element, das am Heck des Flugkörpers angeordnet ist, der Lichtstrahl auf einen Sensor fokussiert, wobei die Fokussierung abhängig vom Winkel zwischen der Lichtstrahlenausbreitungseinrichtung und der Längsachse des Flugkörpers außerzentrisch auf den Sensor erfolgt und der Sensor wenigstens einen radial nach außen verlaufenden, unempfindlichen Segmentbereich oder ein der Sensoroberfläche optisch vorgefaltetes Modulationselement umfasst, das wenigstens einen optischen, radial nach außen verlaufenden Segmentbereich umfasst, der gegenüber benachbarten Bereichen eine reduzierte optische Durchlässigkeit aufweist, derart, dass bei Rotation des Flugkörpers um die Längsachse der außerzentrisch angeordnete Fokus des Lichtstrahls ein rollwinkellagenabhängiges elektrisches Signal erzeugt.

Vorteilhafterweise kann mit der Fokussierung des Lichtstrahls die geometrische Ausrichtung (Lage, Nutation) sowie die Rollwinkellage des Geschosses ermittelt werden, wobei der Fokus zumindest phasenweise auf einen Sensor fällt. Durch den von der Feststation ausgesendeten Lichtstrahl und dessen über das optische Element fokussierten Fokus wird sowohl die Information von einem äußeren Bezugssystem (Lichtstrahl der feststehenden Feststation) als auch Informationen des Flugkörpers und dessen Bewegung (Fokussierung im optischen Element und dem Fokusauftreffpunkt auf den Sensor) mit berücksichtigt. Insbesondere die Verwendung eines fokussierten Lichtstrahls stellt eine zuverlässige Möglichkeit dar, die Bewegungsinformationen des Flugkörpers mittels des von der externen Feststation gesendeten Lichtstrahls auf einfache Weise zu gewinnen. Auch die Nutationsbewegung lässt sich auf diese Weise zuverlässig und hinreichend genau ermitteln.

Bevorzugt ist das elektrische Signal ein infolge des durch die Geschossrotation modulierten Lichtstrahls erzeugtes moduliertes elektrisches Signal. Die Modulation des Lichtstrahls wird vorzugsweise durch das Modulationselement, das beispielsweise eine Modulationsscheibe ist, die radial nach außen verlaufende transmissive und nicht transmissive Segmente aufweist, erzeugt. Diese Segmentbereiche können vorteilhafterweise auch eine asymmetrische und/oder unregelmäßige Speichenstruktur aufweisen. Durch eine derart ausgebildete Modulationsscheibe wird die Lage- und Rotationsinformation des Flugkörpers in das Signal miteingearbeitet, da je nach Rotationsgeschwindigkeit und Fluglage des Flugkörpers die Modifikation des auf den Sensor auftreffenden Lichtstrahls und damit die Modulierung des elektrischen Signales beeinflusst wird.

In einer vorteilhaften Ausgestaltung weisen die transmissiven und nicht transmissiven Segmente unterschiedliche Breiten auf. Beispielsweise kann die kumulierte Fläche der transmissiven Elemente doppelt so groß sein wie die Fläche der nicht transmissiven Segmente. Dadurch wird erreicht, dass mehr Licht auf den Sensor fällt und dass die durch den Sensor modulierten Signale entsprechend anteilig mit großen und kleinen Amplituden reagiert. So kann es beispielsweise vorgesehen sein, dass wenigstens ein nicht transmissives Element in der Modulationsscheibe angeordnet ist, welches wenigstens eine Signalveränderung verursacht.

Neben der Möglichkeit der Informationsgewinnung durch Transmission und Nicht-Transmission des extern ausgesendeten Lichtstrahls mittels stetig nicht transmissiver Elemente kann zusätzlich oder alternativ wenigstens ein polarisierendes Element an der Modulationsscheibe angeordnet sein. Ein Beispiel für ein polarisierendes Element wäre ein Polarisationsfilter, der abhängig vom Rollwinkel des Flugkörpers den Lichtstrahl in einen beispielsweise linear polarisierten Lichtstrahl umwandelt und dieser durch einen entsprechenden Sensor detektierbar ist. Insbesondere wenn ein polarisiertes Licht, beispielsweise ein Laserlicht als Lichtstrahl verwendet wird, kann durch die abwechselnden Hell-Dunkel-Effekte (gänzliche, weniger starke, schwache, unterdrückte Transmission) bei Auftreffen des polarisierten Laserlichtes auf den Polarisationsfilter die Rolllage beziehungsweise die Rotation des Flugkörpers ermittelt werden. In diesem Zusammenhang ist auch die Verwendung unterschiedlich ausgerichteter Polarisationsfolien als positiv zu erwähnen. Wenn nun die transmissiven Bereiche der Modulationsscheibe zusätzlich mit einem polarisierenden Element versehen sind, kann der Informationsgewinn, der oben beschriebenen Modulationsscheibe, insbesondere durch Verwendung eines polarisierten Lichtstrahls, der auf die polarisierenden Elemente trifft, weiter verstärkt werden. Ferner ist es vorteilhaft, wenn vor oder hinter der Modulationsscheibe ein Polarisationselement angeordnet ist, so kann ein einzelnes aufwendig herzustellendes Bauteil, das die Funktion der Modulationsscheibe und des Polarisationselementes umfasst, vermieden und der fertigungstechnisch vorteilhafte Modulcharakter für unterschiedliche Geschossausführungen umgesetzt werden.

In Weiterbildung der Erfindung ist es vorgesehen, dass wenigstens ein transmissiver Bereich eine variable Transmissionsfähigkeit aufweist. So kann beispielsweise die Transmissionsfähigkeit des transmissiven Bereichs zu wenigstens einem angrenzenden nicht transmissiven Bereich hin abnehmen. Dies ermöglicht einen nicht abrupten "weicheren" Übergang für die Signalmodulation, was sich in einem eher sinus- als rechteckähnlichen Signal widerspiegelt, wobei sich ersteres informationstechnisch besser weiterverarbeiten lässt.

Im Sinne einer Zusatzfunktion ist es vorteilhaft, wenn das signalerzeugende Sensorelement in Sensorelementbereiche aufgeteilt ist, die vom Zentrum der Sensoroberfläche unterschiedliche Abstände aufweisen. Diese können beispielsweise als konzentrisch liegende Kreisscheibenabschnitte ausgebildet sein. Damit kann der Winkel zwischen dem Einfall des fokussierten Strahls und der Längsachse des Flugkörpers errechnet und die Nutation des Flugkörpers genau bestimmt werden.

Auch können die Segmente in Quadrantenabschnitte aufgeteilt werden.

Darüber hinaus ist es vorteilhaft, wenn die Modulationsscheibe eine asymmetrische oder unregelmäßige Speichenstruktur mit Speichen unterschiedlicher optischer Durchlässigkeit aufweist.

Insbesondere wenn der Punkt, in dem die asymmetrische oder symmetrische Speichenstruktur zusammenläuft, außermittig von der Sensoroberfläche beabstandet von der optischen Achse der Linse platziert ist, wird auch in diesem Fall eine Signalmodulation initiiert, so dass eine kontinuierliche Modulation des Signals gewährleistet ist. Damit wird auch bei parallelem Lichtstrahleinfall (parallel zur Geschosslängsachse) immer noch eine Signalveränderung erreicht, da der Fokus nicht stetig in einen, während der Eigenrotation des Flugkörpers einheitlich transmissiven oder nicht transmissiven Segmentbereich auftrifft, folglich wird auch in diesem Fall eine Signalmodulation erzeugt.

In Ausgestaltung der Erfindung ist der von der Feststation ausgesendete Lichtstrahl in unterschiedliche Zonen eingeteilt und/oder es können mehrere unterschiedliche Lichtstrahlen von der Feststation ausgesendet werden. Somit kann eine Unterscheidung in welchem Strahl bzw. in welchem Strahlbereich sich das Geschoss befindet als zusätzliche Information verarbeitet werden. Damit ergibt sich eine Bereichsunterscheidung in einer rechtwinklig zur Strahlungsrichtung liegenden Ebene. Die Differenzierung der Lichtstrahlen und/oder der Lichtstrahlbereiche wird vorteilhafterweise über die Wellenlänge, Farbe, Polarisationsausrichtung, Frequenz und/oder Ausbreitungsgeschwindigkeit erreicht. Der Lichtstrahl umfasst in einer vorteilhaften Ausführungsform ein Laserlicht.

Im Sinne einer Zusatzfunktion kann der Lichtstrahl Informationen zur Tempierung des Geschosses während dessen Flugphase übermitteln.

Die Erfindung ist anhand von Ausführungsbeispielen in den Zeichnungsfiguren näher erläutert, diese zeigen:
- Fig. 1: eine schematische Längsschnittdarstellung des Flugkörpers mit seinen wesentlichen Bestandteilen;
- Fig. 2: ein schematisches Blockdiagramm des Zusammenwirkens der einzelnen Komponenten;
- Fig. 3: eine schematische Längsschnittdarstellung des Flugkörpers in der Seitenansicht während des Fluges;
- Fig.4: eine schematische Längsschnittdarstellung des Flugkörpers in Draufsicht;
- Fig. 5a,b: eine schematisch dargestellte Modulationsscheibe.

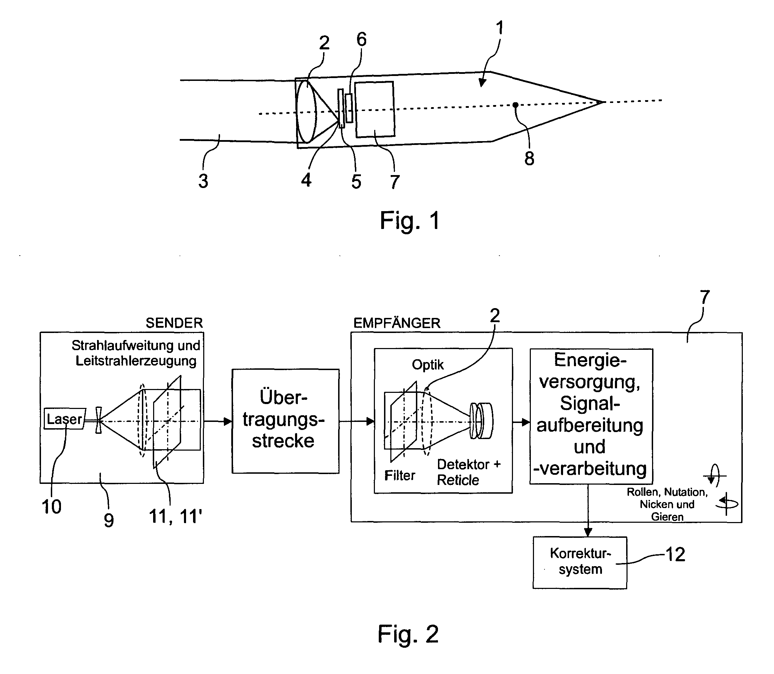

Der in Figur 1 dargestellte Flugkörper 1 weist an seinem Geschossboden eine Empfängeroptik 2 auf, die den einfallenden Sendestrahl/Lichtstrahl 3 zu einem Fokuspunkt 4 auf der Modulationsscheibe 5 und/oder dem Detektor 6 fokussiert. Der Sendestrahl 3 fällt hierbei nicht absolut parallel zur Flugkörperlängsachse 7 ein, so dass der Fokuspunkt 4 beabstandet von der Flugkörperlängsachse 7 auf den Detektor 6 auftrifft. Der Detektor 6 gibt ein Signal an die im Flugkörper 1 eingebaute Elektronik 7.

In Zeichnungsfigur 2 ist der prinzipielle Aufbau und die Funktionsweise des Verfahrens zur Ermittlung der Rollwinkellage dargestellt. So wird der Strahl 3 aus einer Feststation 9, hier als Sender bezeichnet, generiert und ausgesendet. Dabei wird ein Laser 10 als Strahlerzeugungsquelle verwendet. Der erzeugte Lichtstrahl 3 wird aufgeweitet und gegebenenfalls durch einen Filter 10, 10' beispielsweise polarisiert. Der ausgesendete Strahl 3 trifft am Geschossboden auf die Empfängeroptik 2 und bildet einen Fokuspunkt 4. Dadurch, dass der Flugkörper 1 während seines Fluges unter anderem um seine Längsachse 8 rotiert, wandert der Fokuspunkt 4 auf dem Detektor 6, so dass durch diese Veränderung bzw. das Wandern des Fokuspunktes 4 ein Signal generiert und/oder beeinflusst werden kann und diese Signalbeeinflussung zur Informationsgewinnung über das Rollwinkel-, Nutations- und Gierverhalten des Flugkörpers 1 Verwendung finden kann. Dazu ist eine Energieversorgung und eine Signalaufbereitung und -verarbeitung umfassende Elektronik 7 innerhalb des Flugkörpers 1 vorgesehen. Schließlich ist ein Korrektursystem 12 vorgesehen, das die generierten Informationen dazu nutzt, um die Flugbahn des Flugkörpers 1 zu manipulieren und schließlich eine höhere Treffergenauigkeit und geringere Ablagen zu erreichen.

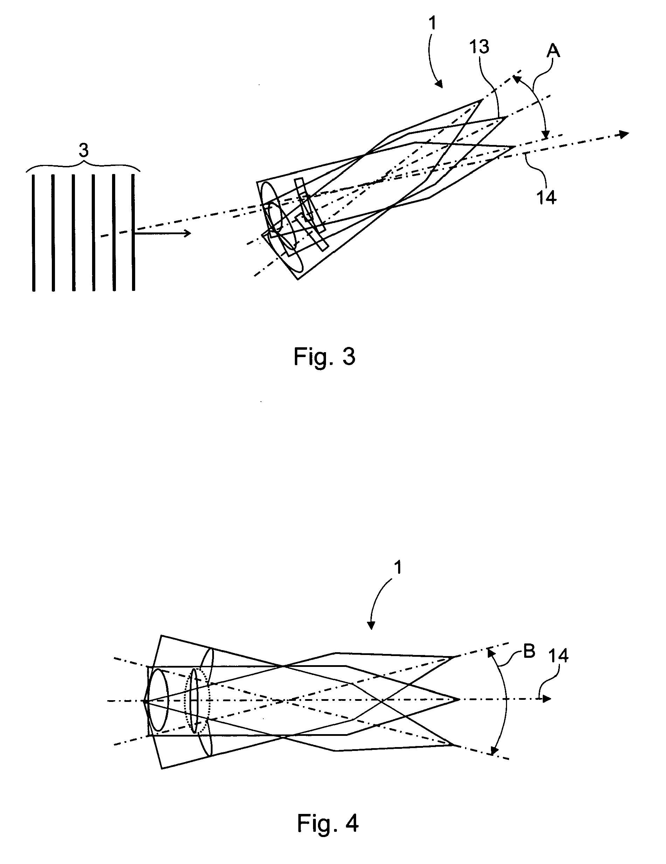

In Zeichnungsfigur 3 ist der Flugkörper 1 in seiner ersten vor dem Apogäum liegenden, ansteigenden Flughälfte dargestellt. Hierbei ist erkennbar, dass der Flugkörper eine Nutationsbewegung A ausführt und dessen Flugkörperspitze 13 oberhalb der Flugbahntangente 14 wandert. Der Sendestrahl 3 ist mit seiner Wellenfront und deren Fortbewegungsrichtung dargestellt. Auch in der Draufsicht, gemäß Fig. 4, vollzieht der Flugkörper 1 eine seitlich von der Flugbahntangente 14 liegende Gierbewegung B der Flugkörperspitze 13, also eine in der horizontalen hin und her schwankende Bewegung. Insbesondere für die in den Zeichnungsfiguren 3 und 4 dargestellten, schwer im Detail vorab berechenbaren Flugkörperbewegungen können mit dem erfindungsgemäßen Verfahren Informationen darüber gewonnen werden und gegebenenfalls Korrekturmaßnahmen eingeleitet werden.

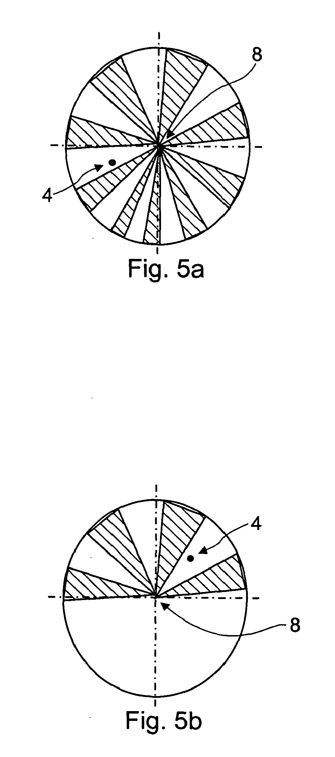

Der Fokuspunkt 4 des Sendestrahls 3 wird entweder direkt auf einen Detektor 6 fokussiert oder überwindet vorher eine Modulationsscheibe 5. Das in den Figuren 5a und b dargestellte Element kann entweder eine Modulationsscheibe 5 oder einen entsprechend mit unterschiedlich reagierenden Bereichen (beispielsweise lichtempfindlicher Widerstand) versehenen Detektor 6 darstellen. Hierbei ist erkennbar, dass die beispielsweise transmissiven (weiß) und nicht transmissiven (grau) gekennzeichneten Bereiche vom Zentrum 8 des Geschosses 1 nach Art von Speichen sich segmentartig über den Querschnitt des Geschosses 1 ausbreiten. Durch die Rollbewegung des Geschosses 1 sind diese Scheiben aus Sicht des Bezugspunktes der Feststation 8 rotierende Segmentbereiche, auf die ein starrer - da von der Feststation ausgesendeter - Sendestrahl 3 auftrifft und einmal auf einen transmissiven und anschließend auf einen nicht transmissiven Bereich trifft und damit einen Input in Form einer Signalveränderung im Detektor 6 bzw. der Elektronik 7 hervorruft. Dabei können die transmissiven und nicht transmissiven Bereiche unterschiedlich große Flächen aufweisen. Grundsätzlich kann auch lediglich der halbe Durchmesser mit sich im Transmissionsgrad unterscheidenden Segmentbereichen ausgebildet sein, vgl. Figur 5. Als Mindestanforderung würde auch nur eine einzige "Speiche" ausreichen, um eine Mindestinformation über die Rollwinkellage des rotierenden Flugkörpers 1 zu ermitteln.

Beispielsweise kann ein Verfahren zur Ermittlung der Rollwinkellage eines rotierenden Flugkörpers wie folgt vorgesehen sein:
1) Verfahren zur Ermittlung der Rollwinkellage eines rotierenden Flugkörpers relativ zu einer Feststation mit Hilfe eines von der Feststation ausgesendeten und von dem Flugkörper empfangenen Lichtstrahls, wobei im Heck des Flugkörpers ein optisches Element angeordnet ist, dadurch gekennzeichnet, dass durch das optische Element der Lichtstrahl auf einen Sensor fokussiert wird, wobei die Fokussierung abhängig vom Winkel zwischen der Lichtstrahlenausbreitungsrichtung und der Längsachse des Flugkörpers außerzentrisch auf den Sensor erfolgt und der Sensor wenigstens einen radial nach außen verlaufenden lichtunempfindlichen Segmentbereich umfasst oder der Sensor ein der Sensoroberfläche optisch vorgeschaltetes Modulationselement umfasst, das wenigsten einen optischen, radial nach außen verlaufenden Segmentbereich umfasst, der gegenüber benachbarten Bereichen eine reduzierte optische Durchlässigkeit aufweist, derart, dass bei Rotation des Flugkörpers um die Längsachse der außerzentrisch angeordnete Fokus des Lichtstrahls ein rollwinkellagenabhängiges elektrisches Signal erzeugt.
2) Verfahren wie in 1), **dadurch gekennzeichnet, dass** das elektrische Signal ein infolge des durch die Geschossrotation modulierten Lichtstrahls erzeugtes moduliertes elektrisches Signal ist.
3) Verfahren wie in 1) oder 2), **dadurch gekennzeichnet, dass** das Modulationselement eine Modulationsscheibe ist, die radial nach außen verlaufende transmissive und nicht transmissive Segmente aufweist.
4) Verfahren wie in 1) oder 2), **dadurch gekennzeichnet, dass** das Modulationselement eine Modulationsscheibe ist, die unterschiedlich ausgerichtete Polarisationsfolien umfasst.
5) Verfahren wie in 1) bis 4), **dadurch gekennzeichnet, dass** die transmissiven und nicht transmissiven Segmente unterschiedliche Breiten aufweisen.
6) Verfahren wie in 3) bis 5), **dadurch gekennzeichnet, dass** wenigstens ein nicht transmissives Element in der Modulationsscheibe angeordnet ist.
7) Verfahren wie in 3) bis 6), **dadurch gekennzeichnet, dass** wenigstens ein transmissives Element der Modulationsscheibe zumindest bereichsweise mit wenigstens einem polarisierenden Element versehen ist.
8) Verfahren wie in 1) bis 7), **dadurch gekennzeichnet, dass** wenigstens ein transmissiver Bereich eine variable Transmissionsfähigkeit aufweist.
9) Verfahren wie in 8), **dadurch gekennzeichnet, dass** die Transmissionsfähigkeit des transmissiven Bereichs zu wenigstens einem angrenzenden nicht transmissiven Bereich hin abnimmt.
10) Verfahren wie in 3) bis 9), **dadurch gekennzeichnet, dass** vor oder hinter der Modulationsscheibe ein Polarisationselement angeordnet ist.
11) Verfahren wie in 1) bis 10), **dadurch gekennzeichnet, dass** das signalerzeugende Sensorelement in Sensorelementbereiche aufgeteilt ist, die vom Zentrum der Sensoroberfläche unterschiedliche Abstände aufweisen.
12) Verfahren wie in 11), **dadurch gekennzeichnet, dass** die Sensorelementbereiche als konzentrisch liegende Kreisscheibenabschnitte ausgebildet sind.
13) Verfahren wie in 11) oder 12), **dadurch gekennzeichnet, dass** die Sensorelementbereiche in Quadrantenabschnitte aufgeteilt sind.
14) Verfahren wie in 3) bis 13), **dadurch gekennzeichnet, dass** die Modulationsscheibe eine asymmetrische oder unregelmäßige Speichenstruktur mit Speichen unterschiedlicher optischer Durchlässigkeit aufweist.
15) Verfahren wie in 1) bis 14), **dadurch gekennzeichnet, dass** der von der Feststation ausgesendete Lichtstrahl in unterschiedliche Zonen eingeteilt ist und/oder mehrere unterschiedliche Lichtstrahlen von der Feststation ausgesendet werden.
16) Verfahren wie in 15), **dadurch gekennzeichnet, dass** der Unterschied des Strahls und/oder der Strahlen in der Wellenlänge, Farbe, Polarisationsausrichtung, Frequenz und/oder Ausbreitungsgeschwindigkeit liegt.
17) Verfahren wie in 1) bis 16), **dadurch gekennzeichnet, dass** der von der Feststation ausgesendete Lichtstrahl Informationen zur Tempierung des Geschosses während dessen Flugphase übermittelt.
18) Verfahren wie in 1) bis 17), **dadurch gekennzeichnet, dass** der Lichtstrahl polarisiert ist.
19) Verfahren wie in 1) bis 18), **dadurch gekennzeichnet, dass** der Lichtstrahl ein Laserlicht ist.

### BEZUGSZEICHENLISTE

- A: Nutationsbewegung
- B: Gierbewegung

- 1: Flugkörper
- 2: Empfängeroptik
- 3: Sendestrahl / Lichtstrahl
- 4: Fokuspunkt
- 5: Modulationsscheibe
- 6: Detektor
- 7: Elektronik
- 8: Längsachse v. 1
- 9: Feststation
- 10: Laser
- 11, 11': Filter
- 12: Korrektursystem
- 13: Flugkörperspitze v. 1
- 14: Flugbahntangente
- 15: Transmissiver Bereich
- 16: Nicht transmissiver Bereich

## Patentansprüche

1. Verfahren zur Ermittlung der Rollwinkellage eines rotierenden Flugkörpers relativ zu einer Feststation mit Hilfe eines von der Feststation ausgesendeten und von dem Flugkörper empfangenen Lichtstrahls, wobei im Heck des Flugkörpers ein optisches Element angeordnet ist,
**dadurch gekennzeichnet,**
**dass** durch das optische Element der Lichtstrahl auf einen Sensor fokussiert wird, wobei die Fokussierung abhängig vom Winkel zwischen der Lichtstrahlenausbreitungsrichtung und der Längsachse des Flugkörpers außerzentrisch auf den Sensor erfolgt und der Sensor wenigstens einen radial nach außen verlaufenden lichtunempfindlichen Segmentbereich umfasst oder der Sensor ein der Sensoroberfläche optisch vorgeschaltetes Modulationselement umfasst, das wenigsten einen optischen, radial nach außen verlaufenden Segmentbereich umfasst, der gegenüber benachbarten Bereichen eine reduzierte optische Durchlässigkeit aufweist, derart, dass bei Rotation des Flugkörpers um die Längsachse der außerzentrisch angeordnete Fokus des Lichtstrahls ein rollwinkellagenabhängiges elektrisches Signal erzeugt.

2. Verfahren nach Anspruch 1,
**dadurch gekennzeichnet,**
**dass** das elektrische Signal ein infolge des durch die Geschossrotation modulierten Lichtstrahls erzeugtes moduliertes elektrisches Signal ist.

3. Verfahren nach Anspruch 1 oder 2,
**dadurch gekennzeichnet,**
**dass** das Modulationselement eine Modulationsscheibe ist, die radial nach außen verlaufende transmissive und nicht transmissive Segmente aufweist.

4. Verfahren nach Anspruch 1 oder 2,
**dadurch gekennzeichnet,**
**dass** das Modulationselement eine Modulationsscheibe ist, die unterschiedlich ausgerichtete Polarisationsfolien umfasst.

5. Verfahren nach einem der vorhergehenden Ansprüche,
**dadurch gekennzeichnet,**
**dass** die transmissiven und nicht transmissiven Segmente unterschiedliche Breiten aufweisen.

6. Verfahren nach einem der Ansprüche 3 bis 5,
**dadurch gekennzeichnet,**
**dass** wenigstens ein nicht transmissives Element in der Modulationsscheibe angeordnet ist.

7. Verfahren nach einem der Ansprüche 3 bis 6,
**dadurch gekennzeichnet,**
**dass** wenigstens ein transmissives Element der Modulationsscheibe zumindest bereichsweise mit wenigstens einem polarisierenden Element versehen ist.

8. Verfahren nach einem der vorhergehenden Ansprüche,
**dadurch gekennzeichnet,**
**dass** wenigstens ein transmissiver Bereich eine variable Transmissionsfähigkeit aufweist.

9. Verfahren nach Anspruch 8,
**dadurch gekennzeichnet,**
**dass** die Transmissionsfähigkeit des transmissiven Bereichs zu wenigstens einem angrenzenden nicht transmissiven Bereich hin abnimmt.

10. Verfahren nach einem der Ansprüche 3 bis 9,
**dadurch gekennzeichnet,**
**dass** vor oder hinter der Modulationsscheibe ein Polarisationselement angeordnet ist.

11. Verfahren nach einem der vorhergehenden Ansprüche,
**dadurch gekennzeichnet,**
**dass** das signalerzeugende Sensorelement in Sensorelementbereiche aufgeteilt ist, die vom Zentrum der Sensoroberfläche unterschiedliche Abstände aufweisen.

12. Verfahren nach einem der Ansprüche 3 bis 11,
**dadurch gekennzeichnet,**
**dass** die Modulationsscheibe eine asymmetrische oder unregelmäßige Speichenstruktur mit Speichen unterschiedlicher optischer Durchlässigkeit aufweist.

13. Verfahren nach einem der vorhergehenden Ansprüche,
**dadurch gekennzeichnet,**
**dass** der von der Feststation ausgesendete Lichtstrahl in unterschiedliche Zonen eingeteilt ist und/oder mehrere unterschiedliche Lichtstrahlen von der Feststation ausgesendet werden.

14. Verfahren nach Anspruch 13,
**dadurch gekennzeichnet,**
**dass** der Unterschied des Strahls und/oder der Strahlen in der Wellenlänge, Farbe, Polarisationsausrichtung, Frequenz und/oder Ausbreitungsgeschwindigkeit liegt.

15. Verfahren nach einem der vorhergehenden Ansprüche,
**dadurch gekennzeichnet,**
**dass** der von der Feststation ausgesendete Lichtstrahl Informationen zur Tempierung des Geschosses während dessen Flugphase übermittelt.
